# EUROPÄISCHE PATENTSCHRIFT

(11) **EP 4 249 219 B1**
(45) Veröffentlichungstag und Bekanntmachung des Hinweises auf die Patenterteilung: **05.06.2024**
(21) Anmeldenummer: 22163227.6
(22) Anmeldetag: 21.03.2022
(51) Int. Cl.: B29C 65/18, B29C 65/78, B29C 65/30

(54) **SAUGSIEGELVORRICHTUNG ZUM WARMSIEGELN EINER ÜBERLAPPUNGSNAHT**
SUCTION SEALING DEVICE FOR HEAT SEALING AN OVERLAPPING SEAM
DISPOSITIF DE SCELLEMENT PAR ASPIRATION PERMETTANT DE SCELLER À CHAUD UNE SOUDURE À RECOUVREMENT

(43) Veröffentlichungstag der Anmeldung: 27.09.2023
(73) Patentinhaber: THEEGARTEN-PACTEC GMBH & CO. KG, 01237 Dresden (DE)
(72) Erfinder: Menter, Daniel, 01307 Dresden (DE); Fuchs, Ingolf, 01099 Dresden (DE); Gretschel, Oliver, 01896 Pulsnitz (DE)
(74) Vertreter: Grünecker Patent- und Rechtsanwälte PartG mbB

(56) Entgegenhaltungen:
- EP-A1- 3 932 655

## Beschreibung

Die vorliegende Erfindung betrifft eine Saugsiegelvorrichtung zum Warmsiegeln einer Überlappungsnaht beim Verpacken von empfindlichen, insbesondere wärmeempfindlichen Produkten, mit einer Siegelleiste, die eine Kontaktseite aufweist und an der Kontaktseite mehrere Saugöffnungen vorgesehen sind.

Eine solche Vorrichtung ist aus der EP 3 932 655 A1 bekannt. Mit dem Saugsiegeln wird das grundsätzliche Problem des Wärmeübergangs vom Packmittel auf das Produkt gelöst, indem sich das Packmittel zumindest im Bereich der Überlappungsnaht während des Siegelvorgangs, zumindest zeitweise, nicht im Kontakt mit dem Produkt befindet. Sobald dieser Kontakt aufgehoben wird, wirkt das dazwischen befindliche Luftpolster als Isolator und schützt das Produkt vor thermischer Belastung. Damit wird sichergestellt, dass bei temperatur- und druckempfindlichen Produkten, wie z.B. Schokoladenstücken oder Schokoladenriegeln, möglichst keine Produktschädigungen erfolgen. Eine Überlappungsnaht hat auch den Vorteil, dass mit dieser in einem einzigen Verarbeitungsschritt (Versiegelung) die Verpackung verschlossen werden kann. Es sind keine nachfolgenden Zusatzmaßnahmen, wie z.B. das Heranfalten und Fixieren einer abstehenden Flossennaht am Produkt notwendig, um das abschließende Verpackungsergebnis zu erzielen. Weiterhin ist es mit diesem Verfahren auch möglich, verbrauchergerechte Verpackungen herzustellen, welche ohne große Krafteinwirkung und ohne zusätzliche Hilfsmittel zu öffnen sind, z.B. können so leicht Originalitätsverschlüsse erzeugt werden. Neben dem Bereitstellen eines ausreichenden Siegeldrucks durch das Ansaugen, hat eine Ansaugung auch weitere Vorteile. Die für die Ansaugung erzeugte, auf der Außenseite des Packmittels stattfindende Luftströmung hat auch einen Kühleffekt. Prinzipiell kann auch die erwärmte Umgebungsluft abgesaugt werden (z.B. während sich der Heizstempel nicht im Kontakt mit der Siegelnaht befindet), wodurch eine entsprechende Kühlwirkung entsteht. Bei Siegeleinrichtungen mit aktiver Wärmequelle wird durch den Luftstrom auch der noch geringfügig wirkenden Strahlungswärme der Siegeleinrichtung entgegengewirkt. Bei der Verwendung des Ansaugens handelt es sich auch um eine einfache umzusetzende Abhebetechnik, zumal die die Ansaugung erzeugenden Mittel auch entfernt von der eigentlichen Siegelstelle angeordnet werden können. Vorrangig soll bei der bekannten Vorrichtung der Abstand der Siegelleiste zum Produkt während des Warmsiegelns verändert werden. Zwar kann mit der bekannten Vorrichtung das Einbringen von übermäßiger Wärme in das Produkt vermieden werden, leider ist die Qualität der Siegelnaht noch nicht ganz ausgereift, weil noch nicht vollständig dafür gesorgt werden kann und die Verpackungsqualität lässt zu wünschen übrig, weil das Packmittel nicht so eng anliegt.

Die GB 1 001 127 A und die DE 1 893 044 U befassen sich mit dem Verpacken von insbesondere Zigarettenschachteln mit einer thermoplastischen Folie. Ein Hauptziel der dort beschriebenen Erfindung besteht darin, Wärme gezielt in eine Überlappungsnaht einzubringen, während angrenzende Bereiche des Verpackungsmaterials gekühlt werden. Ein weiterer Aspekt besteht darin, den unteren Kantenbereich der Überlappungsnaht gegen den oberen Kantenbereich der Überlappungsnaht anzupressen. Gemäß einer Ausführungsform (siehe Fig. 9) ist hierzu vorgesehen, dass der obenliegende Kantenbereich der Überlappungsnaht Öffnungen aufweist und der die Verschweißung bewirkende Heizstab mit zu den Öffnungen fluchtenden Bohrungen versehen ist, die zu einem Saugkanal führen. Hierdurch kann der untenliegende Kantenbereich durch die Öffnungen hindurch angesaugt und somit gegen die Unterseite des oberen Kantenbereichs gedrückt werden, während der Heizstab auf die Überlappungsnaht gedrückt ist. Mittels Kühlbacken werden die zur Überlappungsnaht angrenzenden Zonen des Verpackungsmaterials gekühlt.

Es ist die Aufgabe der vorliegenden Erfindung, eine Saugsiegelvorrichtung der eingangs genannten Art bereitzustellen, die eine verbesserte Versiegelung der Überlappungsnaht bewirkt.

Hierzu ist bei einer gattungsgemäßen Saugsiegelvorrichtung vorgesehen, dass mehrere beim Warmsiegeln in Längsrichtung der Überlappungsnaht nebeneinander angeordnete Saugöffnungen vorgesehen sind und die Kontaktseite eine längs der Überlappungsnaht anzuordnenden, von den Saugöffnungen jeweils unterbrochenen Siegelstreifen mit höherer Wärmeleitfähigkeit und/oder höherer einbringbarer Wärmekapazität als der Rest der Kontaktseite aufweist. Zunächst einmal werden mehrere nebeneinander angeordnete Saugöffnungen verwendet, die auch zur Überlappungsnaht angrenzende Abschnitte (bevorzugt den untenliegenden Kantenbereich) des jeweiligen Packmittels ansaugen. Der gewünschte Bernullieffekt kann nur dann vorteilhaft wirken. Darüber hinaus wird ein gegenüber der Länge der Saugöffnungen schmalerer Siegelstreifen an der Kontaktseite verwendet, der gezielt Wärme möglichst nur im Bereich der Überlappungsnaht bzw. eines Teils der Überlappungsnaht einbringt. Hierzu kann Wärme entweder durch Wärmeleitung dem Siegelstreifen zugeführt oder der Siegelstreifen mit entsprechenden wärmeerzeugenden Elementen, z.B. PTC-Heizelementen, versehen sein. Je schmaler die Saugöffnungen sind, umso kleiner sind die Unterbrechungen des Siegelstreifens. Bei der Erzeugung eines Originalitätsverschlusses sind aber durchaus auch Abschnitte im Bereich der Überlappungsnaht zulässig, die weniger stark warmversiegelt oder gar nicht warmversiegelt sind. Insofern stehen dem Fachmann eine ganze Bandbreite verschiedener Ausgestaltungen hinsichtlich der Anzahl, der Breiten und der Abstände der Saugöffnungen zur Verfügung, um das gewünschte Siegelnahtergebnis mittels des verbleibenden Siegelstreifens und der mit diesem eingebrachten Wärme zu erzeugen. Darüber hinaus wird mit Hilfe des Siegelstreifens auch die Fläche vorgegeben, in der das Packmaterial aufgrund des Warmsiegelvorgangs an der Siegelleiste haften bleiben kann, weil in angrenzenden Flächenbereichen mit geringerer Wärmeleitfähigkeit und/oder mit geringerer einbringbarer Wärmekapazität ein Anhaften aufgrund der Wärmeeinwirkung gar nicht auftritt oder weniger stark ausfällt. Es wird hier im einlagigen Bereich kaum Wärme eingebracht, deswegen entstehen weniger irreversible und unerwünschte Verformungen im Packmittel. Es ergeben sich keine sichtbaren Spuren, wie Verfärbungen oder Schatten auf dem Packmittel.

Bevorzugt kann der Kontaktstreifen von einem Metallwerkstoff, insbesondere einem Kupfer enthaltenden Werkstoff, gebildet sein, wobei angrenzende Bereiche der Kontaktseite von einem Werkstoff mit geringerer Wärmeleitfähigkeit, insbesondere einem wärmebeständigen Kunststoff, gebildet sind. Bevorzugt sollten Werkstoffe gewählt werden, die in diesem Zusammenhang sehr unterschiedlich sind, so dass sehr gezielt die Wärme hauptsächlich mittels des Siegelstreifens in den gewünschten Bereich der Überlappungsnaht eingebracht wird. Gemäß einer Ausführungsform kann die Wärmeleitfähigkeit des Siegelstreifens mindestens 50-mal größer, bevorzugt mindestens 150-mal größer sein als die Wärmeleitfähigkeit des Werkstoffs, der den maßgeblichen übrigen Bestandteil der Kontaktfläche bildet. Die Obergrenze der Wärmeleitfähigkeit des Metallwerkstoffs des Siegelstreifens beträgt maximal 2.500-mal der Wärmeleitfähigkeit des Werkstoffs, der angrenzende Bereiche der Kontaktseite ausbildet. Hierdurch lässt sich ein Anhaften der Siegelleiste am Packmittel aufgrund der Wärmeeinwirkung im Wesentlichen auf den Bereich des Siegelstreifens sehr sicher begrenzen.

Günstigerweise kann die Breite des Siegelstreifens kleiner sein als eine Gesamtbreite der warmzusiegelnden Überlappungsnaht. Unter der Gesamtbreite der Überlappungsnaht ist hier der Längenabschnitt quer zur Längsrichtung der Überlappungsnaht gemeint, bei dem das Packmaterial doppelt aufeinanderliegt. Die eigentliche versiegelte Zone kann dann entsprechend eine geringere Breite aufweisen. Hierdurch ergibt sich auch eine höhere Prozesssicherheit. Bevorzugt kann die Breite des Siegelstreifens mindestens 5 %, bevorzugter mindestens 10 % kleiner und bevorzugt maximal 30 %, bevorzugter maximal 25 % kleiner sein als die Gesamtbreite der Überlappungsnaht. Das bietet Möglichkeiten, dem Verpackungsmaterial Rechnung zu tragen und für eine gute Warmversiegelung zu sorgen. Bevorzugte Materialien sind z.B. Monofolien aus Kunststoff, z.B. PP, oder auch versiegelungsfähige Papiermaterialien. Auf bislang übliche doppellagige Verpackungsweisen, die dem Wärmeschutz der Produkte dienten, kann durch das Saugsiegeln verzichtet werden.

Gemäß einer weiteren günstigen Ausführungsform ist vorgesehen, dass die Saugöffnungen als Langlöcher ausgebildet sind, deren Länge mindestens zweimal, bevorzugt mindestens 4-mal so groß ist wie deren Breite. Damit die Unterbrechungen des Siegelstreifens möglichst schmal ausfallen, werden entsprechende Langlöcher (die Form kann beliebig sein; auch rechteckig) bevorzugt. Bevorzugt kann es dabei vorgesehen sein, dass die Länge der Saugöffnung maximal sechs-, bevorzugt maximal fünfmal so groß ist wie deren Breite.

Damit die Balance zwischen der resultierenden Ansaugkraft einer Saugöffnung und der resultierenden Andrückkraft an einen zwischen zwei Saugöffnungen liegenden Kontaktabschnitt sehr gut eingestellt werden kann, ist gemäß einer weiteren Ausführungsform vorgesehen, dass die Breite eines Kontaktabschnitts der Kontaktseite der Siegelleiste zwischen zwei Saugöffnungen mindestens 0,75-mal, bevorzugt 1,25-mal und noch bevorzugter mindestens 1,75-mal, so groß ist wie eine Breite der Saugöffnung. Es hat sich in der Praxis herausgestellt, dass für die meisten Packmaterialien das hierdurch auftretende Kräfteverhältnis zwischen Ansaugkraft und der damit einhergehenden Heranziehkraft des Packmaterials an den Kontaktabschnitt günstig ist. Insbesondere bei dünnen Packmitteln führen Werte nahe der unteren Bereichsgrenze zu einerhomogeneren Siegelnaht. Bei guter Kühlwirkung ist auch eine weitere Absenkung bis auf mindestens 0,5-mal so groß wie die Breite der Saugöffnung möglich. Von Vorteil ist es weiter, wenn die Breite eines solchen Kontaktabschnitts maximal 8-mal, bevorzugt maximal 6-mal so groß ist wie eine Breite der Saugöffnung. Hierdurch ist sichergestellt, dass noch eine ausreichende Kraft vorhanden ist, mit der das Packmaterial an den Kontaktabschnitt herangezogen wird.

Günstigerweise kann die Länge der Saugöffnungen mindestens 0,8-mal, bevorzugt 1,2-mal und noch bevorzugter mindestens 1,5-mal, größer sein als eine Gesamtbreite der warmzusiegelnden Überlappungsnaht. Hierdurch wird sichergestellt, dass es zu einem großflächigen Anlegen des Packmaterials an die Kontaktseite kommt, was auch Vorteile hat für das gute Anlegen im Bereich des Siegelstreifens. Es erfolgt quasi ein Glattziehen des Packmittels. Die Gesamtbreite der Überlappungsnaht ist vom Zuschnitt abhängig, umso geringer sie ist, desto weniger Packmittel wird benötigt. Günstigerweise kann die Länge der Saugöffnung maximal 2-mal, bevorzugt maximal 1,85-mal größer sein als die Gesamtbreite der Überlappungsnaht. Hierdurch wird eine Optimierung erreicht und es wird nicht unnötig viel Packmaterial angesaugt. Bevorzugt kann die Breite der Kontaktseite der Siegelleiste mindestens 1,1-mal, bevorzugt mindestens 1,15-mal größer sein als die Länge der Saugöffnung, wobei eine Obergrenze der Breite der Kontaktseite der Siegelleiste bei maximal 1,8-mal, bevorzugt maximal 1,5-mal und noch bevorzugter maximal 1,25-mal, der Gesamtbreite der Überlappungsnaht liegen kann.

Je nach Faltart erstrecken sich Überlappungsnähte nicht zwangsläufig über die gesamte Länge des Produkts, weil es zugehörige Endeinschläge gibt. Gemäß einer Ausführungsform kann sich der Siegelstreifen an der Kontaktseite von der ersten bis zur letzten Saugöffnung erstrecken und jeweils im Abstand von den Querrändern der Kontaktseite enden. Das heißt, dass sich der Siegelstreifen in aller Regel nicht notwendigerweise über die jeweils letzten Saugöffnungen an den jeweils zugehörigen Enden des Produkts erstrecken muss und somit im Abstand zu den Produktenden endet. Für das gewünschte Öffnungsverhalten sind die äußersten Enden bevorzugt nicht versiegelt, wodurch sich die Öffnung der Verpackung für den Endverbraucher vereinfacht. Die Wärmeeinbringung erfolgt auch dort nur gezielt im Bereich der Überlappungsnaht, so dass angrenzende Bereiche des Packmittels nicht beeinträchtigt werden und es zu einer sauberen Versiegelung kommt.

Bei einer weiteren Ausführungsform ist vorgesehen, dass die Mittellinie des Siegelstreifens zur Längsmittellinie der Kontaktseite versetzt angeordnet ist. Durch diese Maßnahme kann z.B. der Transportrichtung der Produkte oder der Richtung der Überlappungsnaht (z.B. welcher der Kantenbereiche oben liegt) Rechnung getragen werden. Es besteht aber auch die Möglichkeit, versetzte Versiegelungen durchzuführen, was vom Kundenwunsch abhängt. Der Versatz erfolgt aufgrund der meist geometrisch ausgebildeten, zu verpackenden Produkte bevorzugt parallel versetzt. Günstigerweise beträgt der Versatz mindestens 5 %, bevorzugt mindestens 8 % der Breite der Kontaktseite. Im Gegensatz hierzu können die Saugöffnungen symmetrisch zur Längsmittellinie der Kontaktseite angeordnet werden. Es besteht somit die Möglichkeit, das Packmittel quasi unsymmetrisch zum Siegelstreifen an die Kontaktseite anzusaugen.

Bei einer weiteren Ausführungsform kann ein Niederhalter vorgesehen sein, mit dem zu der Überlappungsnaht benachbarte Abschnitte des Packmaterials am Produkt gehalten werden, wobei die Kontaktseite der Siegelleiste gegenüber einer Produktseite des Niederhalters zumindest beim Warmsiegeln zumindest zeitweise zurückversetzt positioniert ist. Bevorzugt werden sowohl der Innen-, als auch Außeneinschlag, die in der Überlappungszone die Überlappungsnaht formen, an das Produkt angelegt. Mittels eines Niederhalters werden der der Überlappungsnaht benachbarte Abschnitte des Packmaterials am Produkt oder im geringen Abstand zum Produkt fixiert, so dass diese durch den Ansaugvorgang mittels der Saugöffnungen nicht oder nicht nennenswert angehoben werden können. Die Bereitstellung eines Luftpolsters zur Verhinderung von Wärmeeinbringung des Produkts wird demnach nur dort gezielt vorgenommen, wo die Wärme mittels des Siegelstreifens eingebracht werden soll. Darüber hinaus hat sich herausgestellt, dass hierdurch ein sauberer Verpackungsvorgang zu erzielen ist. Bevorzugt kann zumindest die Produktseite des Niederhalters von einem Werkstoff geformt sein, der eine niedrigere Wärmeleitfähigkeit aufweist als der Werkstoff des Siegelstreifens, ähnliche Materialien wie für die übrigen Bereiche der Kontaktseite können verwendet werden. Bevorzugt verläuft die Produktseite des Niederhalters im Wesentlichen parallel zur zugehörigen Produktseite, an der die Überlappungsnaht angeordnet ist.

Bei einer weiteren günstigen Ausgestaltungsvariante ist vorgesehen, dass der Niederhalter zumindest beidseitig der Überlappungsnaht entlang der Kontaktseite der Siegelleiste verläuft, bevorzugt die Überlappungsnaht rahmenartig umgibt oder eine Fensteraussparung aufweist. Dabei können die Produktseite des Niederhalters und die Kontaktseite der Siegelleiste zumindest beim Warmsiegeln, bevorzugt im Betrieb durchgehend einen gleichbleibenden Höhenversatz zueinander aufweisen. Dieser Höhenversatz gibt gleichzeitig das Maß vor, um den das Packmaterial beim Ansaugen abhebt. Günstigerweise kann der Höhenversatz bevorzugt zwischen mindestens 0,3 mm und maximal 1 mm größer als die Höhe der Überlappungsnaht, bevorzugt zwischen 0,35 mm und 0,65 mm, betragen. Es hat sich in der Praxis gezeigt, dass bereits sehr kleine Anhebungen des Packmaterials für eine ausreichende Ausbildung eines isolierenden Luftpolsters zwischen Packmaterial und Produkt führen, so dass die Wärmeeinwirkung des Siegelstreifens in das Produkt bei einem solchen Warmsiegelvorgang zumindest in schädlicher Weise unterbleibt. Das Packmaterial wird dadurch auch nicht zu stark gedehnt.

Des Weiteren kann vorgesehen sein, dass die Längsmittellinie der Kontaktseite der Siegelleiste zu einer Längsmittellinie der Öffnung im Niederhalter versetzt angeordnet ist. Je nach Ausformung der Überlappungsnaht und der Warmversiegelung hat sich in der Praxis herausgestellt, dass aufgrund eines solchen Versatzes eine größere Kraft auf den Innenanschlag oder den Außeneinschlag ausgeübt werden kann. Bevorzugt erfolgt der Versatz parallel versetzt. Des Weiteren kann der Versatz mindestens 20 %, bevorzugt mindestens 25 % der Breite der Kontaktseite und maximal 40 % der Breite der Kontaktseite aufweisen. Des Weiteren besteht die Möglichkeit, dass eine Längsmittellinie der Öffnung, z.B. der Fensteraussparung im Niederhalter und die Mittellinie des Siegelstreifens keinen Versatz oder maximal einen Versatz von 10 % von der Breite des Siegelstreifens aufweisen. Das heißt, dass die Versiegelung an sich zentral innerhalb der Öffnung des Niederhalters stattfindet, dass aber die Anlage an der Kontaktseite verschoben erfolgt. In der Praxis hat sich gezeigt, dass der Versatz der Längsmittellinie der Siegelleiste bevorzugt in Richtung der Produktkante erfolgt, um die der Inneneinschlag der Überlappungsnaht gefaltet ist. Das bedeutet, dass der Inneneinschlag der Überlappungsnaht zu einem größeren Teil an die Kontaktseite angesaugt ist, wodurch die Oberseite des Inneneinschlags auch verstärkt an die Unterseite des Außeneinschlags herangezogen wird. Hierdurch lässt sich die Siegelwirkung verstärken. Je nach Ausführungsform der Verpackung ist es jedoch auch möglich, die Längsmittellinie der Kontaktseite der Siegelleiste und die Längsmittellinie der Öffnung im Niederhalter ohne Versatz auszubilden.

Gemäß einer weiteren Ausführungsform ist vorgesehen, dass die Saugöffnungen sowohl mit einer Saugeinrichtung, als auch einer Blaseinrichtung mittels einer gesteuerten oder geregelten Ventileinrichtung, bevorzugt einer Rotationsventileinrichtung, in Verbindung bringbar sind. Hierdurch kann zwischen Saugwirkung und Blaswirkung umgeschaltet werden. Zum einen lassen sich hierdurch sehr kurze Saug- und Blasimpulse erzeugen und zum anderen bewirkt ein Abblasen, dass eine Anhaftung an der Kontaktseite aufgehoben wird und gleichzeitig eine Kühlung stattfindet. Sofern eine Rotationsventileinrichtung verwendet wird, kann diese bevorzugt ein mittels eines Servomotors angesteuertes Rotationsventil umfassen. Das bedeutet, dass die Saugeinrichtung und Blaseinrichtung unabhängig von der Maschinengeschwindigkeit einstellbar sind, was insbesondere bei Langsamlauf der Maschinen, z.B. während des Einrichtens oder einer Inspektion, von Vorteil ist, um dennoch kurze Siegelzeiten umzusetzen. Saugimpuls und Blasimplus sind von ihrer Länge her mittels einer solchen Ausgestaltung sehr gut einstellbar und können auch sehr scharf aufeinander folgen. Günstigerweise kann eine kurze Ansaugung von 30 ms bis 70 ms, bevorzugt von 45 ms bis 55 ms, verwendet werden. Bevorzugt kann diese Ansaugung von einem Druckluftstoß zum Abblasen der Überlappungsnaht von der Kontaktseite der Siegelleiste gefolgt sein.

Des Weiteren kann sich die Erfindung auf ein Verfahren zum Saugsiegeln einer Überlappungsnaht beim Verpacken von empfindlichen, insbesondere wärmeempfindlichen, Produkten beziehen. Das Verfahren weist folgende Schritte auf:
Umhüllen des Produkts mit einem versiegelungsfähigen Packmittelzuschnitt, wobei eine Überlappungsnaht erzeugt wird, bei der eine Innenseite eines ersten Kantenbereichs auf eine Außenseite eines zweiten Kantenbereichs des Packmittelzuschnitts gefaltet wird,
Niederhalten des Packmittelzuschnitts im Abstand zur und entlang der Überlappungsnaht,
Fixieren der Überlappungsnaht mittels einer Saugsiegelvorrichtung, in dem zumindest ein Bereich oder Bereiche der Überlappungsnaht an eine Kontaktseite der Saugsiegelvorrichtung angesaugt wird bzw. werden, so dass sich der erste und der zweite Kantenbereich des Packmittelzuschnitts im Bereich der Überlappungsnaht vom Produkt abhebt, während ein Niederhalter ein Abheben außerhalb dieses Bereichs zumindest reduziert, bevorzugt verhindert, wobei beim Abheben die Ansaugung derart erfolgt, dass im Bereich von Saugöffnungen der Saugsiegelvorrichtung der Packmittelzuschnitt zumindest einseitig über die Breitenrichtung der Überlappungsnaht hinaus angesaugt wird. Das gezielte Ansaugen innerhalb eines von dem Niederhalter vorgegebenen Bereichs sorgt für ein Anheben nur dieses Abschnitts, der entsprechend abgehoben werden soll, insbesondere des Bereichs, der dem Siegelvorgang unterzogen werden soll. Hierdurch übt dieser Siegelvorgang keine nennenswerten Nachteile auf die bereits erfolgte Faltung des Packmittelzuschnitts aus, so dass es insgesamt zu einer optisch guten Verpackung kommt. Das Saugsiegeln eignet sich vorteilhafterweise für Warmsiegelvorgänge. Es ist jedoch auch denkbar, dass kaltversiegelungsfähige Packmaterialien (auch bei Klebstoffauftrag während des Verpackungsvorgangs), sofern eine ausreichende Anpresskraft mittels des Saugsiegelns aufgebracht werden kann, derart versiegelt werden können. Eine Hauptfunktion des Niederhaltens besteht auch darin, dass die Verpackung vor dem Siegeln in Position gehalten wird. Aus dieser Funktion ergibt sich, dass das Packmittel bevorzugt in den Kantenbereichen horizontal gehalten wird.

Günstigerweise kann die Siegelvorrichtung mehrere nebeneinander an der Kontaktseite angeordnete, längliche Saugöffnungen mit dazwischenliegenden Abschnitten eines, an der Kontaktseite ausgebildeten Siegelstreifens aufweisen, dessen Breite kleiner ist als die Länge der Saugöffnungen, wobei im Bereich des Siegelstreifens an der Kontaktseite eine größere Siegeleinwirkung erfolgt, als außerhalb des Siegelstreifens. Diese größere Siegeleinwirkung kann entweder durch größere Wärmeeinwirkung in diesem Bereich, größere Krafteinwirkung in diesem Bereich etc. ausgeübt werden. Gemeint sind hier alle Parameter, die die Siegelnaht beeinflussen, diese können in diesem Bereich besonders günstig einwirken.

Bei einer weiteren Verfahrensvariante ist vorgesehen, dass auf der einen Seite der Überlappungsnaht die Ansaugwirkung auf den zweiten Kantenbereich näher an einen benachbarten, niedergehaltenen Bereich des Packmittelzuschnitts heranreicht als die Ansaugwirkung auf der anderen Seite der Überlappungsnaht auf den ersten Kantenbereich an einen entsprechend benachbarten niedergehaltenen Bereich des Packmittelzuschnitts. Hierdurch können gezielt Anpressprofile in Breitenrichtung der Überlappungsnaht eingestellt werden, je nachdem, wie diese unterschiedliche Ansaugwirkung ausgestaltet wird. Bevorzugt weist auf der einen Seite der Überlappungsnaht das den zweiten Kantenbereich überdeckende Ende einer Saugöffnung einen kleineren Abstand zum benachbarten niedergehaltenen Bereich des Packmittelzuschnitts auf, als der Abstand des auf der anderen Seite der Überlappungsnaht nur den ersten Kantenbereich überdeckenden Endes der Saugöffnung zum entsprechend benachbarten niedergehaltenen Bereich des Packmittelzuschnitts. Hierdurch wird das Packmaterial auf der einen Seite stärker, d.h. wird mit einem größeren Winkel nach oben gezogen, als auf der gegenüberliegenden Seite, wodurch sich auch unterschiedliche Anpressdrücke auf das Material ergeben. Dies hat maßgebliche Einwirkung auf die Ausbildung der Siegelnaht. Bevorzugt ist die Länge des Abschnitts des zweiten Kantenbereichs, der sich mit der Saugöffnung überdeckt, mindestens 0,7-mal und maximal 1,1-mal so groß wie die Länge der Saugöffnung, während die Länge des Abschnitts des ersten Kantenbereichs, der sich mit der Saugöffnung überdeckt, maximal 0,9-mal und mindestens 0,5-mal so groß ist wie die Länge der Saugöffnung. Die Längen der Kantenbereiche werden hierbei mitberücksichtigt, unabhängig davon, ob sie bei der Überlappungsnaht oben oder unten liegen. Aufgrund dieser unsymmetrischen Ansaugtechnik entstehen günstige Anpressprofile, die sich insbesondere positiv auf das Anlegen der Außenfläche des Inneneinschlags an die Innenseite des Außeneinschlags auswirkt. Letztendlich hängt die konkrete Ausgestaltung von vielen zusätzlichen Faktoren ab (z.B. Kundenanforderung, Falteigenschaften der Maschine), weshalb auch hiervon abweichende Wertebereiche möglich sind.

Im Folgenden wird eine Ausführungsform der vorliegenden Erfindung anhand von Zeichnungen näher erläutert. Es zeigen:
- Fig. 1: eine Seitenansicht einer erfindungsgemäßen Saugsiegelvorrichtung einschließlich Produkt im Vollschnitt,
- Fig. 2: die Saugsiegelvorrichtung aus Fig. 1 in einem Längsschnitt in verkleinerter Darstellung,
- Fig. 3: die Saugsiegelvorrichtung aus Fig. 1 ohne Produkt in einer perspektivischen Unteransicht und
- Fig. 4: eine schematische Skizze zur Erläuterung der Kräfteverhältnisse beim Saugsiegeln.

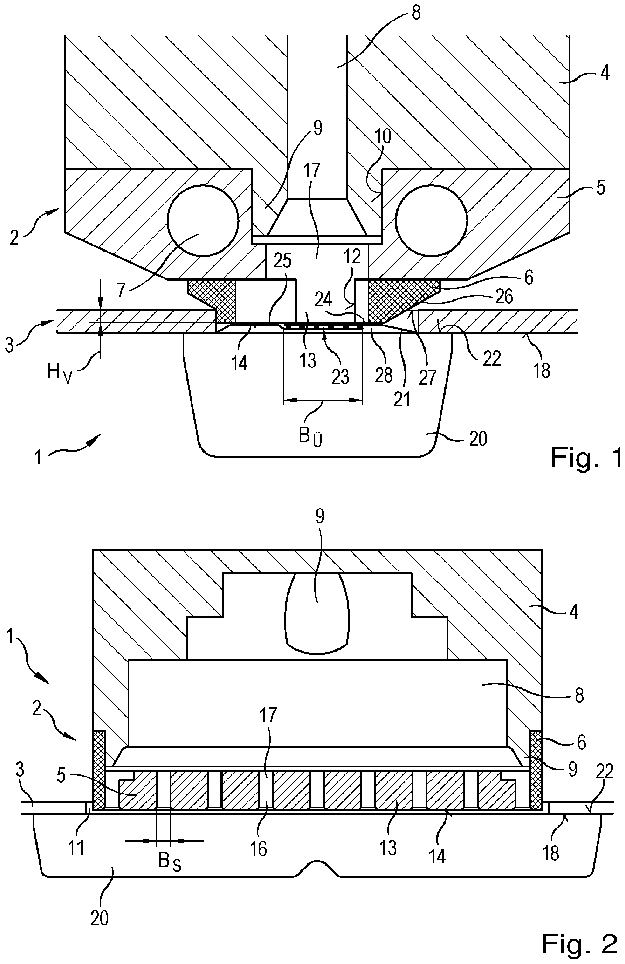

Die in den Fig. 1 bis 3 dargestellte Saugsiegelvorrichtung 1 umfasst eine Siegelleiste 2, einen plattenförmig ausgestalteten Niederhalter 3 und eine Luftführungsleiste 4. Die Siegelleiste 2 ist im vorliegenden Ausführungsbeispiel dreiteilig aufgebaut und umfasst einen aus Messing (d.h. einen Kupfer enthaltenden Metallwerkstoff) bestehenden Wärmekörper 5, eine aus einem wärmebeständigen Kunststoff bestehende Wärmeabschirmleiste 6 sowie einem im Wärmekörper 5 angeordneten elektrischen Widerstandsheizleiter 7.

Die Luftführungsleiste 4 bildet im Inneren eine Luftkammer 8 aus und ist mit einem Anschluss 9 versehen. Der Anschluss 9 ist unter Zwischenschaltung einer geeigneten Ventileinrichtung (nicht dargestellt) sowohl mit einer Saugeinrichtung (nicht dargestellt) als auch mit einer Blaseinrichtung (nicht dargestellt) verbunden. Bei der Ventileinrichtung handelt es sich bevorzugt um ein mittels eines Servomotors drehbar angetriebenen Rotationsventil, so dass in kontrollierter bzw. gesteuerter Weise die Saugeinrichtung oder die Blaseinrichtung mit der Luftkammer 8 in Verbindung steht, so dass wahlweise eine Saugwirkung oder eine Druckwirkung in der Luftkammer 8 erzeugt werden kann. Die Luftführungsleiste 4 weist einen leistenförmigen Vorsprung 9 auf, mit dem diese in eine entsprechende Aussparung 10 in dem leistenförmigen Wärmekörper 5 eingesetzt ist. Auch die Wärmeabschirmleiste 6 ragt zumindest stirnseitig über diesen Vorsprung 9 über (siehe Fig. 2).

Die Wärmeabschirmleiste 6 erstreckt sich mit ihrem unteren Bereich teilweise in eine Fensteraussparung 11 des plattenförmigen Niederhalters 3. Die Wärmeabschirmleiste 6 weist eine längliche, rechteckförmige Aussparung 12 auf, in die im Wesentlichen passgenau ein entsprechender Fortsatz 13 des Wärmekörpers 5 eingesetzt ist. Der Wärmekörper 5 und die Wärmeabschlussleiste 6 sind so miteinander gefügt, dass diese eine gemeinsame Kontaktseite 14 ausbilden. Die der Kontaktseite 14 zugehörige Vorderseite des Wärmekörpers 5 formt somit einen Siegelstreifen 15 aus. In der Wärmeabschirmleiste 6 sind mehrere im gleichen Abstand zueinander angeordnete, als Langloch ausgeformte Saugöffnungen 16 angeordnet. Der Fortsatz 13 des Wärmekörpers 5 erstreckt sich von der ersten bis zur letzten dieser Saugöffnungen 16, so dass der Siegelstreifen 15 im Zwischenraum zwischen sämtlichen Saugöffnungen 16 vorhanden ist. Der Fortsatz 13 des Wärmekörpers 5 und die Wärmeabschirmleiste 6 formen daher jeweils Teilbereiche der Wände der Saugöffnungen 16. Entsprechend wird die ebene Kontaktseite 14 der Siegelleiste 2 auch gemeinsam von der Vorderseite des Fortsatzes 13 (d.h. des Siegelstreifens 15) und der Vorderseite der Wärmeabschirmleiste 6 geformt. Am Grund der Aussparung 10 sind in gleicher Anzahl und Breite Öffnungen 17 vorgesehen, die an einem Ende etwas kürzer sind als die Saugöffnungen 16, ansonsten, entsprechend zugeordnet, mit diesen aber genau fluchten. Aufgrund dieser Ausgestaltung stehen die Saugöffnungen 16 über die Öffnung 17 mit der Luftkammer 8 in Verbindung.

In der vorliegenden Ausgestaltung sind insgesamt neun Saugöffnungen 16 vorhanden. Die Saugöffnungen 16 weisen eine Breite Bs und eine Ls auf. Im vorliegenden Fall ist die Länge Ls 5-mal größer als die Breite Bs.

Der Niederhalter 3 weist eine Produktseite 18 auf. Die Kontaktseite 14 der Siegelleiste 2 weist zur Produktseite 18 des Niederhalters 3 einen Höhenversatz H_{V} auf. Dieser Höhenversatz Hv beträgt im vorliegenden Fall 0,5 mm (bevorzugt zwischen 0,3 mm und 1 mm und noch bevorzugter zwischen 0,35mm und 0,65mm). Die Mittellinie Ms des Siegelstreifens 15 weist zur Längsmittellinie M_{K} der Kontaktseite 14 einen Versatz V₁ auf. Dieser Versatz V₁ beträgt im vorliegenden Fall 10 % der Breite B_{K} der Kontaktseite 14 (und erfüllt somit das Erfordernis von mindestens 5 %, bevorzugt mindestens 8 % und maximal 20 % der Breite B_{K}).

Eine Längsmittellinie M_{N} der Fensteraussparung 11 ist in der vorliegenden Ausführungsform deckungsgleich zur Mittellinie Ms des Siegelstreifens 15. Die Längsmittellinie M_{K} der Kontaktseite 14 weist somit zu der Längsmittellinie M_{N} der Fensteraussparung 11 einen Versatz V₂ auf, der dem Versatz V₁ entspricht.

Die Saugöffnungen 16 sind im Wesentlichen symmetrisch zur Mittellinie M_{K} der Kontaktseite 14 ausgerichtet, so dass diese ebenfalls versetzt in der Fensteraussparung 11 angeordnet sind.

Der Werkstoff des Wärmekörpers 5, nämlich Messing, weist eine Wärmeleitfähigkeit von 120 W/(m·K) auf. Als Werkstoff für die Wärmeabschirmleiste 6 wird ein Polyamid (PA) mit einer Wärmeleitfähigkeit von 0,25 bis 0,35 W/(m·K) oder ein Polytetrafluorethylen (PTFE) mit einer Wärmeleitfähigkeit von 0,25 W/(m·K) eingesetzt. Hieraus ergibt sich, dass die Wärmeleitfähigkeit im Bereich des Siegelstreifens 15 342- bis 480-mal größer ist als die Wärmeleitfähigkeit an der übrigen Kontaktseite 14, die von der Wärmeabschirmleiste 6 gebildet wird. Die Bandbreite bei den Polyamiden ergibt sich aufgrund der verschiedenen Varianten in dieser Produktgruppe. Die Breite Ba, eines Kontaktabschnitts 19 der Kontaktseite 14 zwischen zwei Saugöffnungen 16 ist im vorliegenden Ausführungsbeispiel zweimal so groß wie eine Breite Bs der Saugöffnung 16 (entspricht somit mindestens 0,75-mal, bevorzugt mindestens 1,25-mal und noch bevorzugter mindestens 1,75-mal, größer als Bs).

In den Fig. 1 und 2 ist das zu verpackende Produkt 20 dargestellt. Es handelt sich im vorliegenden Fall um einen länglichen Schokoladenriegel. Schokolade schmilzt je nach Zusammensetzung bei Temperaturen zwischen 40°C und 50°C. Solche Temperaturen dürfen daher nicht an das Produkt 20 gelangen, insbesondere nicht durch den Warmsiegelvorgang. In Fig.1 ist zusätzlich das Packmittel 21 gezeigt. Im vorliegenden Fall handelt es sich um eine warmversiegelungsfähige Monofolie, die als rechteckförmiger Packmittelzuschnitt vorliegt und vorab in nicht dargestellten Schritten mittels eines Falteinschlags um das Produkt 20 herum gefaltet worden ist. Hierzu wird der rechteckige Packmittelzuschnitt an das Produkt herangeführt und in mehreren Schritten herum gefaltet. An der Unterseite 22 des Produkts 20 entsteht aufgrund des Falteinschlags eine Überlappungsnaht 23. Die Überlappungsnaht 23 wird durch Aufeinanderfalten des obenliegenden Kantenbereichs 24 (Außeneinschlag) auf den untenliegenden Kantenbereich 25 (Inneneinschlag) erzeugt. Das Packmittel 21 liegt demnach im Bereich der Überlappungsnaht 23 doppelt. Die Überlappungsnaht 23 erstreckt sich aufgrund der Form des Falteinschlags im vorliegenden Fall nicht über die gesamte Länge des Produkts 20, weshalb die Siegelleiste 2 kürzer ausgeführt sein kann, als das Produkt 20. Darüber hinaus ist zur Erzeugung eines Originalitätsverschlusses nicht zwingend eine Komplettversiegelung notwendig. Die Überlappungsnaht 23 weist eine Breite B_{Ü} auf. Die Breite B_{Ü} ergibt sich durch die gesamte Länge, in der das Packmittel 21 doppelt liegt. Die herzustellende Siegelnaht ist im vorliegenden Fall schmaler als die Breite Bü. Dies ergibt sich daraus, dass die Breite B, des Siegelstreifens 15 kleiner ist als die Breite B_{Ü} der Überlappungsnaht 23. Im vorliegenden Fall beträgt die Breite B₁ ca. 0,8-mal der Breite B_{Ü} (bevorzugt wird ein Bereich von 0,95 bis 0,7-mal von Bü). Des Weiteren ist die Länge Ls der Saugöffnungen 16 im vorliegenden Fall ca. 1,8-mal größer als die Gesamtbreite B_{Ü} der Überlappungsnaht 23 (entspricht somit mindestens 0,8-mal, bevorzugt mindestens 1,2-mal und noch bevorzugter von mindestens 1,5-mal, größer als B_{Ü} und maximal 2-mal, bevorzugt maximal 1,85-mal, größer als Bü).

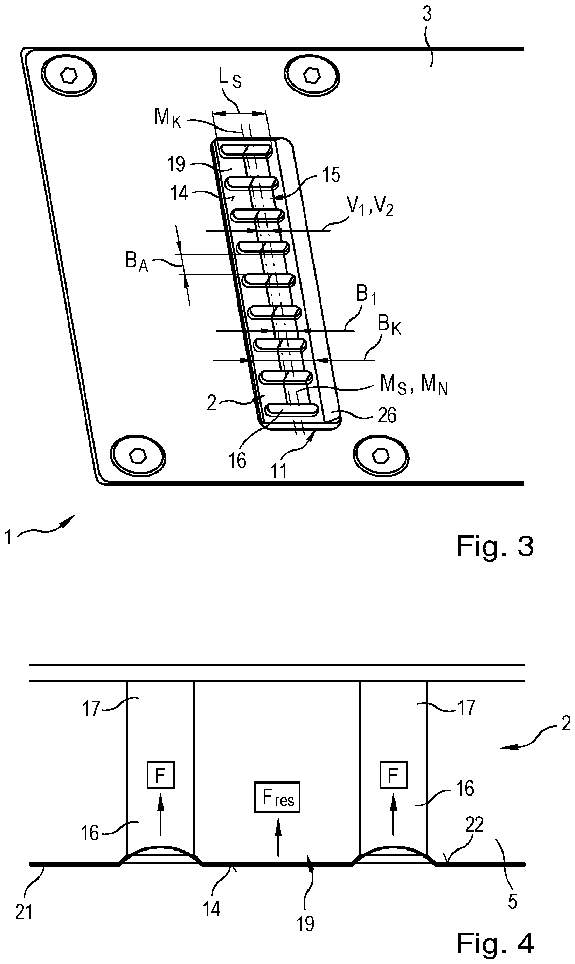

Im Folgenden wird die Funktions- und Wirkungsweise der oben beschriebenen Saugsiegelvorrichtung 1 unter zusätzlicher Zuhilfenahme der Fig. 4 sowie das zugehörige Verfahren zum Saugsiegeln der Überlappungsnaht 23 näher erläutert.

Nachdem das bereits mittels eines Falteinschlags mit dem Packmittel 21 versehene Produkt 20 der Saugsiegelvorrichtung 1 zugeführt wurde, wird das Saugsiegeln durchgeführt, während die Saugsiegelvorrichtung 1 und das Produkt 20 relativ zueinander stillstehen. Das heißt, dass die gewählte Saugsiegelvorrichtung 1 und auch das Produkt 20 während dieses Vorgangs keine Relativbewegung zueinander ausführen müssen. Lediglich das Packmittel 21 wird mittels des Saugsiegelvorgangs von der Unterseite 22 des Produkts 20 abgehoben (wie in Fig. 1 dargestellt). Dieser relative Stillstand von Saugsiegelvorrichtung 1 und Produkt 20 ist mit entscheidend für die Qualität der Versiegelung.

Wie aus Fig. 1 zu sehen ist, wird das Produkt 20 einschließlich des Packmittels 21 an die Produktseite 18 des Niederhalters 3 herangeführt, so dass die Überlappungsnaht 23 im Wesentlichen zentral innerhalb der Fensteraussparung 11 des Niederhalters 3 angeordnet ist. An den Enden des Produktes 20 kann es auch zur Überdeckung des Niederhalters und der Überlappungsnaht 23 kommen. Das bedeutet, dass der Niederhalter 3 das Packmittel 21 am umlaufenden Rand der Unterseite 22 des Produkts 20 niederhält, so dass sich das Packmittel 20 beim Saugsiegelvorgang in den niedergehaltenen Bereichen nicht oder nicht wesentlich von dem Produkt 20 abhebt. Im vorliegenden Fall beträgt die Überdeckung an den Randabschnitten jeweils ca. 12 % der Breite der Unterseite 22 des Produkts 20 (die Überdeckung liegt an jedem Randbereich bevorzugt in einem Bereich von 8 bis 15 % der Breite der Unterseite 22 des Produkts). Der eigentliche Saugsiegelvorgang beginnt dann damit, dass, sobald das Produkt 20 mit dem eingeschlagenen Packmittel 21 relativ zur Saugsiegelvorrichtung 1 wie in Fig. 1 positioniert ist, über die nicht dargestellte Saugeinrichtung und deren Ansteuerung mittels des ebenfalls nicht dargestellten Rotationsventils ein Saugstrom (Vakuum) in der Luftkammer 8, den Öffnungen 17 und den Saugöffnungen 16 erzeugt wird. Damit zunächst ein entsprechender Kühlstrom entsteht, ist die Wärmeabschirmleiste 6 so ausgestaltet, dass sie auf der dem obenliegenden Kantenbereich 24 zugeordneten Seite eine Anschrägung 26 aufweist. Hierdurch wird quasi ein Schlitz 27 ausgebildet, durch den Luft angesaugt wird, die in die Fensteraussparung 11 eintritt und entlang der Oberseite des Packmittels 21 strömt. Dies geschieht nur für einen kurzen Zeitraum, bis die Saugkraft ausreicht, das Packmittel 21, insbesondere im Bereich der Überlappungsnaht 23, so anzuheben, dass sich das Packmittel 21 möglichst großflächig an die Kontaktseite 14 der Siegelleiste 2 anlegt (siehe Fig. 1). Der dabei von dem Packmittel 21 und insbesondere der Überlappungsnaht 23 durchgeführte Hub entspricht im Wesentlichen dem Höhenversatz Hv. Auf der dem untenliegenden Kantenbereich 25 zugeordneten Seite der Wärmeabschirmleiste 6 ist die Wärmeabschirmleiste 6 so ausgeformt, dass sie im Wesentlichen bündig an der Fensteraussparung 11 anliegt, weshalb auf dieser Seite im Wesentlichen keine Ansaugung von Luft im Zusammenhang mit dem Saugsiegelvorgang erfolgt. Aufgrund der Versätze V₁ und V₂ erfolgt auch das Anheben des Packmittels 21 von der Unterseite 22 des Produkts nicht symmetrisch. Die Saugöffnungen 16 überdecken sich nämlich mit dem untenliegenden Kantenbereich 25 über eine größere Strecke, als mit dem obenliegenden Kantenbereich 24. Hierdurch wird ein größerer Abschnitt des untenliegenden Kantenbereichs 25, der neben der Überlappungsnaht 23 liegt, an die Kontaktseite 14 herangezogen, als ein neben der Überlappungsnaht 23 liegender, obenliegender Kantenbereich 24. Dies hat einen positiven Effekt hinsichtlich der Anpresskräfte, weil der untenliegende Kantenbereich 25 insgesamt stärker nach oben gezogen und somit an den obenliegenden Kantenbereich 24 angedrückt wird. Ein weiterer sich ergebender Effekt hängt mit der benötigten Ansauggeschwindigkeit zusammen. Zumindest der untenliegende Kantenbereich 25 soll möglichst in derselben Geschwindigkeit wie die Überlappungsnaht 23 angesaugt werden (gilt je nach Ausführungsform der Überdeckung auch für den neben der Überlappungsnaht 23 liegenden oberen Kantenbereich 24). Im Bereich der Überlappungsnaht 23 stellt sich aufgrund der Doppellagigkeit und des Abstands Hv schneller ein nahezu vollständiges Vakuum ein. Dadurch entsteht eher eine Anpresskraft zwischen der Überlappungsnaht 23 und dem heißen Siegelstreifen 15 als am untenliegenden Kantenbereich 25. Die benötigte Verweilzeit des Produktes 20 wird reduziert und es sind höhere Taktzahlen möglich.

Der Widerstandsheizleiter 7 versorgt den Wärmekörper 5 mit ausreichender Siegelwärme, die mittels des Fortsates 13 auch zum Siegelstreifen 15 gelangt. Im Bereich des Siegelstreifens 15 kommt die Überlappungsnaht 23 zur Anlage an die Kontaktseite 14 derart, dass hier eine ausreichende Wärmeeinbringung in die Überlappungsnaht 23 erfolgt. Hierdurch kommt es zum partiellen Aufschmelzen des Packmittels 21 im Bereich der Überlappungsnaht 23 und zu einer Warmversiegelung, während angrenzende Bereiche der Kontaktseite 14 dieser Siegelwärme weniger ausgesetzt sind. Durch das Abheben des Packmittels 21 entsteht quasi zwischen dem Packmittel 21 und der Unterseite 22 des Produkts 20 eine Art Luftpolster, welches isolierend wirkt und dafür sorgt, dass kein nachteiliger Wärmeeintrag in das wärmeempfindliche Produkt 20 erfolgt.

Wie insbesondere anhand der Fig. 4 zu erkennen ist, erfolgt im Bereich der Saugöffnungen 16 ein verstärktes Anheben des Packmittels 21 mit einer Kraft F. Selbstverständlich ist im Bereich der Saugöffnungen 16 das Packmittel 21 ebenfalls einer geringeren Wärmeeinwirkung ausgesetzt, so dass im Bereich der Saugöffnungen 16 je nach Wärmeführung der Siegelleiste 2 nur eine geringere oder auch keine nennenswerte Warmversiegelung erfolgt. Letzteres ist für die Erzeugung eines Originalitätsverschlusses aber ohnehin vernachlässigbar. Die Höhe der erzeugten Kraft F im Bereich der Saugöffnungen 16 hängt selbstverständlich von der bereitgestellten Saugleistung der Saugvorrichtung und eventuell geringfügig von dem Material des Packmittels 21 sowie der Querschnittsabmessungen der Saugöffnungen 16, insbesondere deren Breite Bs ab. Hieraus ergibt sich eine resultierende Kraft Fᵣₑₛ. Diese hängt von der Breite B_{A} der Kontaktabschnitte 19 ab. Das heißt: die einzustellende resultierende Kraft Fᵣₑₛ lässt sich in gewünschter Weise auf das Packmittel 21 sowie die Form und Qualität der gewünschten Siegelnaht einstellen. Je höher die Kraft F ist, desto höher wird die resultierende Kraft Fᵣₑₛ bei Beibehaltung der geometrischen Gegebenheiten. Alternativ können die geometrischen Parameter verändert werden, um Einfluss auf die Höhe der resultierenden Kraft Fᵣₑₛ zu nehmen. Damit das Packmittel 21 nicht zu sehr durch die Saugwirkung leidet, kann im Eingangsbereich der Saugöffnungen 16 eine Anfasung oder Kantenabrundung erfolgen, um in diesen Bereichen die Kantenkräfte zu reduzieren. Die Anfasung oder Abrundung wird jedoch nicht der Breite Bs der Saugöffnung 16 zugerechnet.

Der Ansaugvorgang erfolgt nur relativ kurz. Im vorliegenden Beispiel wirkt die Ansaugung lediglich während einer Zeitdauer von 50ms. Während dieser Zeit wirkt die Wärme im Bereich des Siegelstreifens 15 auf die Überlappungsnaht 23 ein. Mittels des servogesteuerten Rotationsventils wird dann von der Saugeinrichtung zur Blaseinrichtung umgeschaltet, so dass im Bereich der Luftkanal 8 der Öffnungen 17 und der Saugöffnungen 16 ein Druckimpuls erzeugt wird, der so stark ist, dass sich die Überlappungsnaht 23 von dem Siegelstreifen 15 löst. Gleichzeitig erfolgt eine Kühlung der Packmitteloberfläche, weil nach dem Ablösen wieder ein Luftstrom durch die Fensteraussparung 11 und den Schlitz 27 entweichen kann. Das Packmittel 21 löst sich von der Kontaktseite 14 und liegt wieder direkt am nun fertig verpackten Produkt 20 an, wobei die Überlappungsnaht 23 erst nach ausreichender Abkühlung mit dem Produkt 21 wieder in Kontakt kommt.

Die Saugsiegelvorrichtung 1 ist geeignet mit einer Leistung von bis zu 600 Produkten/min bei Schokoladenriegeln und Pralinen als Produkten zu arbeiten. Bei Schokoladenriegeln in Brieffaltung mit oder ohne Banderole ist eine Leistung von bis zu 850 Produkten/min möglich. Untersuchungen mit verschiedenem Packmittel haben gezeigt, dass bei dünneren Folien (z.B. 25 µm) sogar mehr als 1500 Produkte/min möglich sind. Zurzeit ist hauptsächlich nur die Leistung der bekannten Verpackungsmaschinen dann begrenzend. Die Leistung einer Maschine lässt sich selbstverständlich durch Parallelbetrieb von zwei oder mehreren Saugsiegelvorrichtungen 1 erhöhen. Aufgrund der Einfachheit der Saugsiegelvorrichtung 1 ist auch ein Nachrüsten von bestehenden Verpackungsmaschinen möglich.

Die innovative Technologie bietet mehrere Vorteile. Zum einen wird zur Ableitung von Wärme und zum Schutz der Produkte kein Aluminiumlaminat mehr benötigt, wodurch Materialkosten reduziert werden können. Zweitens verringern sich negative Umwelteinflüsse, die durch die Herstellung des Materials hervorgerufen werden. Drittens entfällt eine Abrolleinheit für die zweite Schicht an Verpackungsmaterial, insbesondere Aluminiumpapier oder Aluminium-PP-Verbunde in der Verpackungsmaschine. Das spart Rüst- und Einstellzeiten und macht den Verpackungsprozess stabiler und damit weniger störanfällig.

Das Besondere am Saugsiegeln ist, dass auch die flächigen überlappenden Bereiche (Überlappungsnaht) des Packmittels 21 aufgrund der Steifigkeit des Materials, der resultierenden Anlegekraft F_{RES} sowie der ansaugenden Luftströmung der Saugsiegelvorrichtung 1 (Bernoulli-Effekt) miteinander versiegeln, durch welche der notwendige Kontakt und der Siegeldruck der Siegelflächen zueinander hergestellt wird. Darüber hinaus wird das Packmittel 21 nur leicht angehoben, weshalb es nur zu reversiblen Dehnungen des Materials kommt, was zu einer sauberen Siegelnaht führt. Die Wärme wird gezielt nur dort eingebracht, wo sie benötigt wird; jedoch wird gleichzeitig für ein großflächiges Anlegen auch angrenzend zu Überlappungsnaht 23 befindlicher Bereiche des Packmittels 21 an die Kontaktseite gesorgt. Dieses Zusammenspiel sorgt für einen sicheren Siegelvorgang, der nachteilige Wärmeeinflüsse auf das Produkt fernhält und zu einer qualitativ hochwertigen versiegelten Überlappungsnaht 23 sorgt.

### Bezugszeichenliste

- 1: Saugsiegelvorrichtung
- 2: Siegelleiste
- 3: Niederhalter
- 4: Luftführungsleist
- 5: Wärmekörper
- 6: Wärmeabschirmleiste
- 7: Widerstandsheizleiter
- 8: Luftkammer
- 9: Vorsprung
- 10: Aussparung
- 11: Fensteraussparung
- 12: Aussparung
- 13: Fortsatz
- 14: Kontaktseite
- 15: Siegelstreifen
- 16: Saugöffnung
- 17: Öffnung
- 18: Produktseite
- 19: Kontaktabschnitt
- 20: Produkt
- 21: Packmittel
- 22: Unterseite
- 23: Überlappungsnaht
- 24: obenliegender Kantenbereich
- 25: untenliegender Kantenbereich
- 26: Anschrägung
- 27: Schlitz
- 28: Luftpolster
- F: = Ansaugkraft
- F_{RES}: = resultierende Kraft
- H_{V}: = Höhenversatz
- B_{Ü}: = Gesamtbreite Überlappungsnaht
- B_{S}: = Breite Saugöffnung
- L_{S}: = Länge Saugöffnung
- M_{K}: = Längsmittellinie Kontaktseite
- M_{S}: = Mittellinie Siegelstreifen
- M_{N}: = Mittellinie Fensteraussparung
- V₁: = Versatz M_{S} und M_{K}
- V₂: = Versatz M_{S} und M_{N}
- B_{A}: = Breite Kontaktabschnitt
- B₁: = Breite Siegelstreifen
- B_{K}: = Breite Kontaktseite

## Patentansprüche

1. Saugsiegelvorrichtung (1) zum Warmsiegeln einer Überlappungsnaht (23) beim Verpacken von empfindlichen, insbesondere wärmeempfindlichen Produkten (20), mit einer Siegelleiste (2), die eine Kontaktseite (14) aufweist und an der Kontaktseite (14) mit mehreren Saugöffnungen (16) versehen ist, **dadurch gekennzeichnet, dass** mehrere beim Warmsiegeln in Längsrichtung der Überlappungsnaht nebeneinander angeordnete Saugöffnungen (16) vorgesehen sind, und die Kontaktseite (14) einen längs der Überlappungsnaht (23) anzuordnenden von den Saugöffnungen (16) jeweils unterbrochenen Siegelstreifen (15) mit höherer Wärmeleitfähigkeit und/oder höherer einbringbarer Wärmekapazität als der Rest der Kontaktseite (14) aufweist.

2. Saugsiegelvorrichtung (1) nach Anspruch 1, **dadurch gekennzeichnet, dass** der Siegelstreifen (15) von einem Metallwerkstoff, insbesondere einem Kupfer enthaltenden Werkstoff, gebildet ist und angrenzende Bereiche der Kontaktseite (14) von einem Werkstoff mit geringerer Wärmeleitfähigkeit, insbesondere einem wärmebeständigen Kunststoff, gebildet sind.

3. Saugsiegelvorrichtung (1) nach Anspruch 1 oder 2 zum Warmsiegeln einer Überlappungsnaht (23) mit einer Gesamtbreite (Bü), **dadurch gekennzeichnet, dass** die Breite (B₁) des Siegelstreifens (15) kleiner ist als die Gesamtbreite (B_{Ü}) der Überlappungsnaht (23).

4. Saugsiegelvorrichtung (1) nach einem der Ansprüche 1 bis 3, **dadurch gekennzeichnet, dass** die Saugöffnungen (16) als Langlöcher ausgebildet sind, deren Länge (Ls) mindestens zweimal, bevorzugt mindestens viermal so groß ist wie deren Breite (B_{S}).

5. Saugsiegelvorrichtung (1) nach einem der Ansprüche 1 bis 4, **dadurch gekennzeichnet, dass** die Breite (B_{A}) eines Kontaktabschnitts (19) der Kontaktseite (14) der Siegelleiste (2) zwischen zwei Saugöffnungen (16) mindestens 0,75-mal, bevorzugt 1,25-mal und noch bevorzugter mindestens 1,75-mal so groß ist wie eine Breite (B_{S}) der Saugöffnung (16).

6. Saugsiegelvorrichtung (1) nach einem der Ansprüche 1 bis 5 zum Warmsiegeln einer Überlappungsnaht (23) mit einer Gesamtbreite (Bü), **dadurch gekennzeichnet, dass** die Länge (Ls) der Saugöffnung (16) mindestens 0,8-mal, bevorzugt 1,2-mal und noch bevorzugter mindestens 1,5-mal größer ist als die Gesamtbreite (Bü) der Überlappungsnaht (23).

7. Saugsiegelvorrichtung (1) nach einem der Ansprüche 1 bis 6, **dadurch gekennzeichnet, dass** sich der Siegelstreifen (15) an der Kontaktseite (14) von der ersten bis zur letzten Saugöffnung (16) erstreckt und jeweils im Abstand von den Querrändern der Kontaktseite (14) endet.

8. Saugsiegelvorrichtung (1) nach einem der Ansprüche 1 bis 7, **dadurch gekennzeichnet, dass** die Mittellinie (Ms) des Siegelstreifens (15) zur Längsmittellinie (M_{K}) der Kontaktseite (14) versetzt angeordnet ist.

9. Saugsiegelvorrichtung (1) nach einem der Ansprüche 1 bis 8, **dadurch gekennzeichnet, dass** ein Niederhalter (3) vorgesehen ist, mit dem der Überlappungsnaht (23) benachbarte Abschnitte des Packmittels (21) am Produkt haltbar sind und dass die Kontaktseite (14) der Siegelleiste (2) gegenüber einer Produktseite (18) des Niederhalters (3) zumindest beim Warmsiegeln zumindest zeitweise zurückversetzt positioniert ist.

10. Saugsiegelvorrichtung (1) nach Anspruch 9, **dadurch gekennzeichnet, dass** der Niederhalter (3) zumindest beidseitig der Überlappungsnaht (23) entlang der Kontaktseite (14) der Siegelleiste (2) verläuft und eine Öffnung formt, bevorzugt die Kontaktseite (14) rahmenartig umgibt oder eine Fensteraussparung (11) aufweist.

11. Saugsiegelvorrichtung (1) nach Anspruch 10, **dadurch gekennzeichnet, dass** die Längsmittellinie (M_{K}) der Kontaktseite (14) der Siegelleiste (2) zu einer Mittellinie (M_{N}) der Öffnung im Niederhalter (3) versetzt angeordnet ist.

12. Saugsiegelvorrichtung (1) nach einem der Ansprüche 1 bis 11, **dadurch gekennzeichnet, dass** die Saugöffnungen (16) sowohl mit einer Saugeinrichtung als auch mit einer Blaseinrichtung mittels einer gesteuerten oder geregelten Ventileinrichtung, bevorzugt einer Rotationsventileinrichtung, wirkverbunden sind.

13. Verfahren zum Saugsiegeln einer Überlappungsnaht (23) beim Verpacken von empfindlichen, insbesondere wärmeempfindlichen Produkten (20), mit folgenden Schritten:
Umhüllen des Produkts (20) mit einem versiegelungsfähigen Packmittelzuschnitt, wobei eine Überlappungsnaht (23) erzeugt wird, bei der eine Innenseite eines ersten Kantenbereichs (24) auf eine Außenseite eines zweiten Kantenbereichs (25) des Packmittelzuschnitts gefaltet wird,
Niederhalten des Packmittelzuschnitts im Abstand zur und entlang der Überlappungsnaht (23),
Fixieren der Überlappungsnaht (23) mittels einer Saugsiegelvorrichtung, in dem zumindest ein Bereich oder Bereiche der Überlappungsnaht (23) an eine Kontaktseite (14) der Saugsiegelvorrichtung angesaugt wird bzw. werden, so dass sich der erste und der zweite Kantenbereich (24, 25) des Packmittelzuschnitts im Bereich der Überlappungsnaht (23) vom Produkt (20) abhebt, während ein Niederhalter (3) ein Abheben außerhalb dieses Bereichs zumindest reduziert, bevorzugt verhindert, wobei beim Abheben die Ansaugung mittels der Saugsiegelvorrichtung derart erfolgt, dass im Bereich von Saugöffnungen (16) der Saugsiegelvorrichtung der Packmittelzuschnitt zumindest einseitig über die Breitenrichtung der Überlappungsnaht (23) hinaus angesaugt wird.

14. Verfahren nach Anspruch 13, **dadurch gekennzeichnet, dass** die Saugsiegelvorrichtung (1) mehrere nebeneinander an der Kontaktseite (14) angeordnet, längliche Saugöffnungen (16) mit dazwischen liegenden Abschnitten (19) eines an der Kontaktseite (14) ausgebildeten Siegelstreifens (15) aufweist, dessen Breite (B₁) kleiner ist als die Länge (Ls) der Saugöffnung (16), und im Bereich des Siegelstreifens (15) an der Kontaktseite (14) eine größere Siegeleinwirkung erfolgt als außerhalb des Siegelstreifens (15).

15. Verfahren nach Anspruch 13 oder 14, **dadurch gekennzeichnet, dass** auf der einen Seite der Überlappungsnaht (23) die Ansaugwirkung auf den zweiten Kantenbereich (25) des Packmittelzuschnitts näher an einen benachbarten niedergehaltenen Bereich des Packmittelzuschnitts heranreicht als die Ansaugwirkung auf der anderen Seite der Überlappungsnaht (23) auf den ersten Kantenbereich (24) zum benachbarten niedergehaltenen Bereich des Packmittelzuschnitts.

## Claims

1. Suction sealing device (1) for heat-sealing an overlapping seam (23) when packaging sensitive, in particular heat-sensitive products (20), having a sealing bar (2) with a contact side (14) and is provided with a plurality of suction openings (16) on the contact side (14), **characterized in that** a plurality of suction openings (16) arranged next to one another in the longitudinal direction of the overlapping seam during heat sealing are provided, and the contact side (14) has a sealing strip (15), which is to be arranged along the overlapping seam (23) and is interrupted by the suction openings (16), and which has a higher thermal conductivity and/or a higher introducible heat capacity than the rest of the contact side (14).

2. Suction sealing device (1) according to claim 1, **characterized in that** the sealing strip (15) is formed from a metal material, in particular a copper-containing material, and adjacent areas of the contact side (14) are formed from a material having a lower thermal conductivity, in particular a heat-resistant plastic.

3. Suction sealing device (1) according to claim 1 or 2 for heat-sealing an overlapping seam (23) having a total width (Bu), **characterized in that** the width (B₁) of the sealing strip (15) is smaller than the total width (Bu) of the overlapping seam (23).

4. Suction sealing device (1) according to one of claims 1 to 3, **characterized in that** the suction openings (16) are configured as elongated holes whose length (Ls) is at least twice, preferably at least four times, as large as their width (B_{S}).

5. Suction sealing device (1) according to one of claims 1 to 4, **characterized in that** the width (B_{A}) of a contact section (19) of the contact side (14) of the sealing bar (2) between two suction openings (16) is at least 0.75 times, preferably 1.25 times and more preferably at least 1.75 times as large as a width (B_{S}) of the suction opening (16).

6. Suction sealing device (1) according to one of the claims 1 to 5 for heat-sealing an overlapping seam (23) having a total width (Bu), **characterized in that** the length (Ls) of the suction opening (16) is at least 0.8 times, preferably 1.2 times and more preferably at least 1.5 times larger than the total width (Bu) of the overlapping seam (23).

7. Suction sealing device (1) according to one of the claims 1 to 6, **characterized in that** the sealing strip (15) extends on the contact side (14) from the first to the last suction opening (16) and ends in each case at a distance from the transverse edges of the contact side (14).

8. Suction sealing device (1) according to one of claims 1 to 7, **characterized in that** the centerline (Ms) of the sealing strip (15) is arranged offset from the longitudinal center line (M_{K}) of the contact side (14).

9. Suction sealing device (1) according to one of claims 1 to 8, **characterized in that** a hold-down device (3) is provided, with which sections of the packaging material (21) adjacent to the overlapping seam (23) can be held on the product, and wherein the contact side (14) of the sealing bar (2) is positioned at least temporarily set back with respect to a product side (18) of the hold-down device (3), at least during heat sealing.

10. Suction sealing device (1) according to claim 9, **characterized in that** the hold-down device (3) extends along the contact side (14) of the sealing bar (2) on at least on both sides of the overlapping seam (23) and forms an opening, which preferably surrounds the contact side (14) in a frame-like manner or has a window recess (11).

11. Suction sealing device (1) according to claim 10, **characterized in that** the longitudinal center line (M_{K}) of the contact side (14) of the sealing bar (2) is offset from a centerline (M_{N}) of the opening in the hold-down device (3).

12. Suction sealing device (1) according to one of the claims 1 to 11, **characterized in that** the suction openings (16) are operatively connected both to a suction device and to a blowing device by means of a controlled or regulated valve device, preferably a rotary valve device.

13. Method for suction sealing an overlapping seam (23) when packaging sensitive, in particular heat-sensitive products (20), having the following steps:
Wrapping the product (20) having a sealable packaging blank, wherein an overlapping seam (23) is produced in which an inner side of a first edge area (24) is folded onto an outer side of a second edge area (25) of the packaging blank,
Holding down the packaging blank at a distance from and along the overlapping seam (23),
Fixing the overlapping seam (23) by means of a suction sealing device, in which at least one region or regions of the overlapping seam (23) is or are sucked onto a contact side (14) of the suction sealing device, so that the first and second edge areas (24, 25) of the packaging blank are lifted off the product (20) in the region of the overlapping seam (23), while a hold-down device (3) at least reduces, preferably prevents, lifting off outside this region, wherein during lifting off the suction by means of the suction sealing device takes place in such a way that in the region of suction openings (16) of the suction sealing device the packaging blank is sucked in on at least one side beyond the width direction of the overlapping seam (23).

14. Method according to claim 13, **characterized in that** the suction sealing device (1) has several elongate suction openings (16) arranged next to one another on the contact side (14), with sections (19) of a sealing strip (15) configured on the contact side (14) lying between them, the width (B₁) of which is smaller than the length (Ls) of the suction opening (16), and wherein a greater sealing effect occurs in the area of the sealing strip (15) on the contact side (14) than outside the sealing strip (15).

15. Method according to claim 13 or 14, **characterized in that** on one side of the overlapping seam (23), the suction effect on the second edge area (25) of the packaging material blank reaches closer to an adjacent held-down region of the packaging material blank than the suction effect on the other side of the overlapping seam (23) on the first edge area (24) to the adjacent held-down region of the packaging material blank.

## Revendications

1. Dispositif de scellage par aspiration (1) permettant de sceller à chaud une soudure par recouvrement (23) lors de l'emballage de produits (20) fragiles, en particulier sensibles à la chaleur, comprenant une baguette de scellage (2) présentant un côté de contact (14) et munie de plusieurs orifices d'aspiration (16) sur le côté de contact (14), **caractérisé en ce que** plusieurs orifices d'aspiration (16) agencés côte à côte dans le sens longitudinal de la soudure par recouvrement lors du scellage à chaud sont prévus, et le côté de contact (14) présente une bande de scellage (15) interrompue par les orifices d'aspiration (16), à agencer le long de la soudure par recouvrement (23) et présentant une conductivité thermique plus élevée et/ou une capacité thermique disponible plus élevée que celle(s) du reste du côté de contact (14).

2. Dispositif de scellage par aspiration (1) selon la revendication 1, **caractérisé en ce que** la bande de scellage (15) est formée à partir d'un matériau métallique, en particulier d'un matériau contenant du cuivre, et des régions adjacentes du côté de contact (14) sont formées à partir d'un matériau présentant une conductivité thermique plus faible, en particulier un plastique résistant à la chaleur.

3. Dispositif de scellage par aspiration (1) selon la revendication 1 ou 2, permettant de sceller à chaud une soudure par recouvrement (23) présentant une largeur totale (B_{Ü}), **caractérisé en ce que** la largeur (B₁) de la bande de scellage (15) est inférieure à la largeur totale (B_{Ü}) de la soudure par recouvrement (23).

4. Dispositif de scellage par aspiration (1) selon l'une quelconque des revendications 1 à 3, **caractérisé en ce que** les orifices d'aspiration (16) sont réalisés sous forme de trous allongés dont la longueur (Ls) est au moins deux fois, de manière préférée au moins quatre fois, supérieure à leur largeur (B_{S}).

5. Dispositif de scellage par aspiration (1) selon l'une quelconque des revendications 1 à 4, **caractérisé en ce que** la largeur (B_{A}) d'une section de contact (19) du côté de contact (14) de la baguette de scellage (2) entre deux orifices d'aspiration (16) est au moins 0,75 fois, de manière préférée 1,25 fois et de manière plus préférée au moins 1,75 fois supérieure à une largeur (B_{S}) de l'orifice d'aspiration (16).

6. Dispositif de scellage par aspiration (1) selon l'une quelconque des revendications 1 à 5, permettant de sceller à chaud une soudure par recouvrement (23) présentant une largeur totale (Bü), **caractérisé en ce que** la longueur (Ls) de l'orifice d'aspiration (16) est au moins 0,8 fois, de manière préférée 1,2 fois et de manière plus préférée au moins 1,5 fois supérieure à la largeur totale (B_{Ü}) de la soudure par recouvrement (23).

7. Dispositif de scellage par aspiration (1) selon l'une quelconque des revendications 1 à 6, **caractérisé en ce que** la bande de scellage (15) s'étend sur le côté de contact (14) du premier jusqu'au dernier orifice d'aspiration (16) et se termine respectivement à distance des bords transversaux du côté de contact (14).

8. Dispositif de scellage par aspiration (1) selon l'une quelconque des revendications 1 à 7, **caractérisé en ce que** la ligne médiane (Ms) de la bande de scellage (15) est agencée de manière décalée par rapport à la ligne médiane longitudinale (M_{K}) du côté de contact (14).

9. Dispositif de scellage par aspiration (1) selon l'une quelconque des revendications 1 à 8, **caractérisé en ce qu'**un serre-flan (3) est prévu, avec lequel des sections du moyen d'emballage (21) voisines de la soudure par recouvrement (23) peuvent être retenues au niveau du produit et **en ce que** le côté de contact (14) de la baguette de scellage (2) est positionné au moins temporairement en retrait par rapport à un côté de produit (18) du serre-flan (3) au moins pendant le scellage à chaud.

10. Dispositif de scellage par aspiration (1) selon la revendication 9, **caractérisé en ce que** le serre-flan (3) s'étend au moins des deux côtés de la soudure par recouvrement (23) le long du côté de contact (14) de la baguette de scellage (2) et forme un orifice, de manière préférée entoure le côté de contact (14) à la manière d'un cadre ou présente un évidement formant fenêtre (11).

11. Dispositif de scellage par aspiration (1) selon la revendication 10, **caractérisé en ce que** la ligne médiane longitudinale (M_{K}) du côté de contact (14) de la baguette de scellage (2) est agencée dans le serre-flan (3) de manière décalée par rapport à une ligne médiane (M_{N}) de l'orifice.

12. Dispositif de scellage par aspiration (1) selon l'une quelconque des revendications 1 à 11, **caractérisé en ce que** les orifices d'aspiration (16) sont reliés de manière fonctionnelle à la fois à un dispositif d'aspiration et à un dispositif de soufflage au moyen d'un dispositif de soupape, de manière préférée au moyen d'un dispositif de soupape rotative, commandé ou régulé.

13. Procédé de scellage par aspiration d'une soudure par recouvrement (23) lors de l'emballage de produits fragiles, en particulier sensibles à la chaleur (20), comprenant les étapes ci-dessous consistant à :
envelopper le produit (20) avec une découpe d'emballage susceptible d'être scellée, dans lequel une soudure par recouvrement (23) est générée, pour laquelle une face intérieure d'une première région de bord (24) est pliée sur une face extérieure d'une seconde région de bord (25) de la découpe d'emballage,
maintenir la découpe d'emballage à distance, et le long, de la soudure par recouvrement (23),
immobiliser la soudure par recouvrement (23) au moyen d'un dispositif de scellage par aspiration, au sein duquel au moins une ou plusieurs région(s) de la soudure par recouvrement (23) est/sont aspirée(s) au niveau d'un côté de contact (14) du dispositif de scellage par aspiration, de sorte que les première et seconde régions de bord (24, 25) de la découpe d'emballage dans la région de la soudure par recouvrement (23) se soulèvent du produit (20), tandis qu'un serre-flan (3) au moins réduit, de manière préférée empêche, un soulèvement à l'extérieur de ladite région,
dans lequel l'aspiration intervient au moyen du dispositif de scellage par aspiration lors du soulèvement de telle manière que la découpe d'emballage est aspirée au moins d'un côté dans le sens de la largeur de la soudure par recouvrement (23) dans la région des orifices d'aspiration (16) du dispositif de scellage par aspiration.

14. Procédé selon la revendication 13, **caractérisé en ce que** le dispositif de scellage par aspiration (1) présente plusieurs orifices d'aspiration (16) allongés agencés côte à côte sur le côté de contact (14) et comprenant des sections (19), intercalées entre lesdits orifices, d'une bande de scellage (15) réalisée sur le côté de contact (14) et dont la largeur (B₁) est inférieure à la longueur (Ls) de l'orifice d'aspiration (16), et une action de scellage supérieure à celle ayant lieu à l'extérieur de la bande de scellage (15) intervient dans la région de la bande de scellage (15) sur le côté de contact (14).

15. Procédé selon la revendication 13 ou 14, **caractérisé en ce que,** sur un côté de la soudure par recouvrement (23), l'effet d'aspiration sur la seconde région de bord (25) de la découpe d'emballage est plus proche d'une région, maintenue voisine, de la découpe d'emballage que, sur l'autre côté de la soudure par recouvrement (23), l'effet d'aspiration sur la première région de bord (24) par rapport à la région, maintenue voisine, de la découpe d'emballage.
